# FASCICULE DE BREVET EUROPEEN

(11) **EP 2 018 783 B1**
(45) Date de publication et mention de la délivrance du brevet: **20.02.2013**
(21) Numéro de dépôt: 07725366.4
(22) Date de dépôt: 18.05.2007
(51) Int. Cl.: H04W 72/00

(54) **Détermination d'associations entre des informations de priorité et des catégories d'appel de groupe d'un service d'appel de groupe déployé sur un réseau de téléphonie mobile**
Bestimmung von Assoziationen zwischen Prioritätsinformationen und Gruppenanrufkategorien eines in einem Mobiltelefonnetz eingesetzten Gruppenanrufdienstes
Determining associations between priority information and group call categories of a group call service deployed on a mobile telephone network

(30) Priorité: 18.05.2006 FR 0604440
(43) Date de publication de la demande: 28.01.2009
(73) Titulaire: SAGEMCOM ENERGY & TELECOM SAS, 92500 Rueil-Malmaison (FR)
(72) Inventeur: SIRAPIAN, Sevan, F-94240 L'Hay Les Roses (FR)
(74) Mandataire: Maillet, Alain
(86) Numéro de dépôt international: PCT/EP2007/004458
(87) Numéro de publication internationale: WO 2007/134811

(56) Documents cités:
- GB-A- 2 368 493
- US-A- 5 634 197
- US-A1- 2004 005 904

## Description

La présente invention concerne un procédé de détermination d'associations entre des informations de priorité et des catégories d'appel de groupe d'un service d'appel de groupe déployé sur un réseau de téléphonie mobile.

Les réseaux de téléphonie mobile modernes permettent la mise en oeuvre de services d'appels autres que le service bien connu, dit point à point, dans lequel un usager établit une communication avec un autre usager.

Ces autres services sont appelés, dans la suite de la description, services d'appels de groupe et sont accessibles par un usager une fois que cet usager a souscrit un abonnement auprès d'un fournisseur de services de téléphonie mobile. Un service d'appel de groupe est un service qui permet à un usager d'émettre un appel à destination de plusieurs autres usagers qui ont également souscrit, au préalable, ce service.

Les appels de groupe d'un service d'appels de groupe sont généralement regroupés par catégorie. Les appels de groupe sont regroupés en catégorie car leur fonctionnement diffère quelque peu. Par exemple, dans le cas particulier du réseau de téléphonie mobile GSM (Global System for Mobile Communication, système global de communication mobile) et plus particulièrement dans le cas d'un réseau GSM-R (GSM pour les chemins de fer), deux catégories d'appels de groupes sont envisagés: les appels VGCS (Voice Group Call Service) définis par la norme GSM 02.68 (ETSI EN 300 925) et les appels VBS (Voice Broadcast Service, service de diffusion de voie) définis par la norme GSM 02.69 (ETSI EN 300 926). Dans le cas d'un appel de groupe GSM (VGCS ou VBS), lorsque l'initiateur de l'appel a fini de parler, un autre usager, jusqu'à maintenant à l'écoute, peut prendre la parole à son tour. De plus, pendant qu'un usager parle, appelé locuteur, les autres usagers ne peuvent pas prendre la parole et leurs demandes sont rejetées par le réseau de téléphonie. Les appels VBS se distinguent toutefois des appels VGCS quant à la prise de parole par un usager à l'écoute d'un appel en cours. En effet, dans le cas d'appels VBS, lorsqu'un usager, jusque là à l'écoute, souhaite prendre la parole, il doit attendre que le locuteur ait fermé son appel.

Lors de la planification d'un réseau de téléphonie mobile supportant un service d'appels de groupe, des zones géographiques sont constituées par regroupement d'au moins une cellule de ce réseau de téléphonie sur laquelle au moins une catégorie d'appel de groupe est distribuée. A chaque catégorie d'appel de groupe distribuée sur une zone géographique particulière est associée un identifiant GID (Group Identification) qui est défini par le fournisseur de service lors de cette planification. Par la suite, l'identifiant d'une catégorie d'appel de groupe distribuée sur une zone géographique particulière est appelé identifiant d'appel de groupe.

Lorsqu'un usager souscrit un service d'appel de groupe, il souscrit au moins une catégorie d'appel de groupe ainsi qu'au moins une zone géographique du réseau de téléphonie planifié sur laquelle elle est distribuée. Pour chaque catégorie d'appel de groupe souscrite et pour chacune des zones géographiques sur laquelle elle est distribuée l'identifiant d'appel de groupe correspondant est ajouté dans une liste d'identifiants d'appels de groupe relative à cet usager. De plus, une information de l'état d'activation de cet appel de groupe est activée. C'est-à-dire qu'une indication, généralement une valeur booléenne, relative à la catégorie de cet appel de groupe et à une zone géographique sur laquelle elle est distribuée, est mémorisée dans une liste d'états d'activation des appels de groupe qui est, d'une part, relative à cet usager, et d'autre part, étroitement liée à la liste d'identifiants d'appels de groupe de cet usager. Cette valeur booléenne est mise à 1 lorsqu'une catégorie d'appel de groupe distribuée sur cette zone géographique particulière est activée pour un usager. L'usager peut alors initier un appel de groupe d'une catégorie donnée lorsqu'il se trouve sous la couverture du réseau de téléphonie mobile à condition que, d'une part, l'identifiant d'appel de groupe, correspondant à la catégorie de cet appel soit distribué sur la zone géographique dans laquelle il se trouve, soit présent dans sa liste d'identifiants d'appels de groupe, et, d'autre part, l'information de l'état d'activation de cet appel de groupe ait été activée. L'appel de groupe est alors établi par le réseau de téléphonie dans cette zone géographique. Des usagers qui ont préalablement souscrit à cet appel de groupe ainsi établi, c'est-à-dire à cette catégorie d'appel de groupe pour cette zone géographique, et qui se trouvent dans cette zone géographique reçoivent alors l'appel de groupe et peuvent se mettre à son écoute.

Il est commun que les réseaux de téléphonie modernes qui permettent l'établissement d'appels de groupe, fournissent également la possibilité d'associer un niveau de priorité aux appels qui sont initiés, que ces appels soient point à point ou de groupe. Dans de tels réseaux de téléphonie, à chaque usager est associé un niveau maximum de priorité unique utilisé par défaut pour l'établissement d'un appel point à point ou de groupe. Ce niveau de priorité est alors mémorisé dans le réseau de téléphonie.

Ce niveau maximum de priorité peut être modifié par l'usager par souscription, auprès d'un fournisseur de services de téléphonie, à un service de priorité appelé, dans le cas particulier d'un réseau GSM, service eMLPP (enhanced Multi-Level Pre-emption and Priority, priorité et préemption multi-niveaux améliorés).

Un service eMLPP fournit différents niveaux de priorité (dont un niveau de priorité maximum) pour l'établissement d'appel, pour le *handover* et parfois pour le *roaming* lorsque le réseau le permet. Nous limiterons la suite de la description de ce service au cas de l'établissement d'un appel.

Les niveaux de priorité, une fois déterminés, sont alors mémorisés sur un support mémoire amovible, généralement la carte SIM (Subscriber Identity Module), avec les autres données relatives aux abonnements de l'usager. Par exemple, dans le cas particulier du réseau GSM, sept niveaux de priorité (A, B, 0 à 4) peuvent être utilisés. Les niveaux A et B, les plus élevés, sont réservés aux appels dits d'urgence et seuls les niveaux 0 à 4 (le niveau 4 est le plus faible) peuvent être utilisés par les usagers pour l'établissement de leurs appels.

A chaque initiation d'appel, l'usager peut choisir un niveau de priorité. Il doit, pour cela, taper sur le clavier de son terminal de téléphonie mobile une séquence de digits particulière suivie de l'identifiant de l'appel qu'il souhaite initier. Par exemple, dans le cas d'un réseau GSM, la séquence de digits est la suivante : *75<niveau priorité>#<identifiant d'appel>. On peut remarquer que l'association d'un niveau de priorité selon l'appel est fastidieuse pour l'usager qui doit, pour cela, mémoriser des séquences de digits et notamment les identifiants d'appel et les niveaux de priorité. On peut également noter que, dans le cas où le niveau de priorité choisi est supérieur au niveau maximum de priorité autorisé pour un usager, que ce niveau maximum soit déterminé par défaut, respectivement déterminé par souscription, le niveau de priorité choisi est limité par le réseau de téléphonie, respectivement par le terminal de téléphonie mobile par lecture de ce niveau maximum sur le support mémoire amovible de l'usager.

L'association d'une priorité avec l'initiation d'un appel peut également se faire de manière automatique par le terminal de téléphonie mobile utilisé par l'usager pour établir cet appel. Le terminal initie alors l'appel en utilisant soit le niveau de priorité par défaut mémorisé dans le réseau, soit un des niveaux de priorité mémorisés sur le support mémoire amovible de l'usager, dans le cas où celui-ci a souscrit un service eMLPP.

Le service eMLPP offre également la possibilité de préemption, c'est-à-dire qu'en cas de congestion du réseau de téléphonie due à un nombre trop important de demandes simultanées d'établissement d'appels de groupe sur une même zone géographique, les demandes faites par les usagers ayant les niveaux de priorité les plus faibles ne peuvent aboutir tant que les demandes faites par des usagers ayant souscrit un niveau de priorité plus élevé n'aient abouti. Dans le cas où les niveaux de priorité sont identiques, les demandes d'établissement d'appels de groupe sont gérées par file d'attente.

On peut noter que de tels services de priorité d'appels permettent d'associer des niveaux de priorité d'appel à chaque usager. Le niveau de priorité relatif à l'établissement d'un appel est donc le même quel que soit le type (point à point, de groupe) de cet appel. Ainsi, dans le cas où un nombre important d'usagers solliciterait un niveau maximum de priorité très élevé lors de leurs souscriptions au service de priorité d'appel, il peut se produire des congestions du réseau qui augmentent le temps d'établissement de leurs appels. Le service de priorité perd ainsi de son intérêt pour les usagers.

Un terminal mobile utilisé par un usager pour accéder à un réseau de téléphonie est équipé d'un support mémoire amovible qui est, le plus souvent, une carte SIM. Cette carte est indispensable dans le cas particulier d'un réseau GSM pour qu'un mobile puisse accéder aux services GSM (excepté pour les appels de numéros d'urgence). Dans la suite de la description, l'invention est décrite en considérant que le support mémoire est une carte SIM car c'est le support mémoire le plus largement utilisé à ce jour pour équiper un terminal de téléphonie mobile. Cependant, l'invention ne se limite pas à ce type de support mémoire.

Une carte SIM est une entité fonctionnelle GSM contenant toutes les données concernant un usager et notamment les informations relatives aux souscriptions de services d'appels de groupe et eMLPP. Une carte SIM est organisée autour d'un processeur et contient différents types de mémoire et plus précisément une mémoire ROM (Read Only Memory), une mémoire EEPROM (Electrical Erasable Programmable Read Only Memory) et une mémoire RAM( Random Acess Memory).

Une carte SIM est une carte à puce dont l'architecture de la mémoire est sous la responsabilité du fabricant de cartes et n'est pas précisée par les normes. Cependant, l'architecture des données vue de l'extérieur, reprend l'architecture arborescente hiérarchisée classique des systèmes d'exploitation.

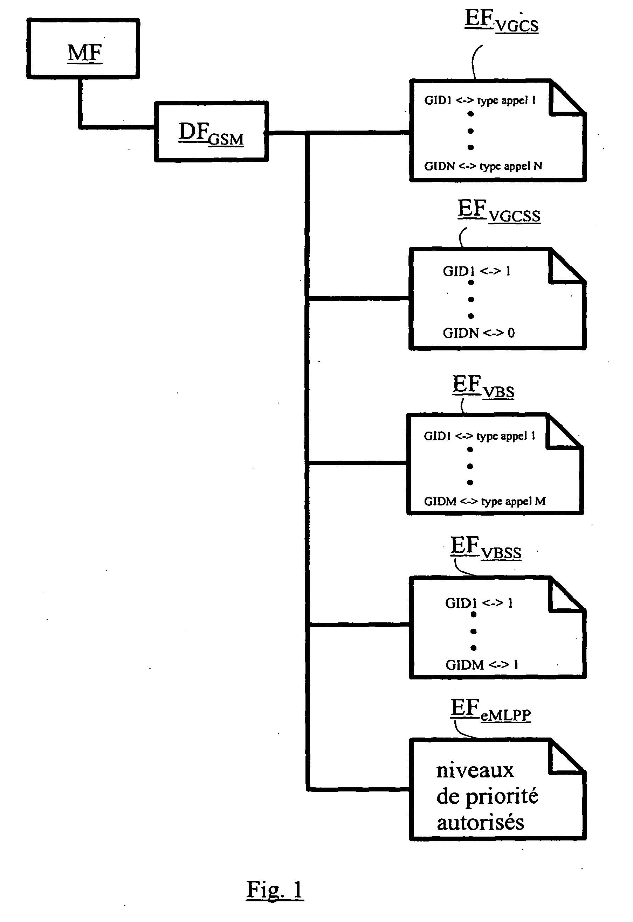

La Fig. 1 représente un exemple d'architecture d'une carte SIM. La racine MF d'une telle arborescence est toujours constituée par le fichier maître (Master File) ou des fichiers dédiés (DF). Les fichiers DF sont des répertoires qui peuvent contenir eux-mêmes d'autres fichiers DF ou des fichiers élémentaires (EF). Selon l'exemple de la Fig. 1, qui fait référence au projet EIRENE concernant le réseau GSM-R (ERTMS/GSM-R document O-2418), l'architecture de la carte SIM est en outre constituée d'un fichier maître MF, d'un fichier dédié DF_{GSM}, de quatre fichiers élémentaires EF_{VGCS}, EF_{VGCSS}, EF_{VBS} et EF_{VBSS} et d'un fichier EF_{eMLPP}. Ces cinq fichiers élémentaires héritent du fichier dédié DF_{GSM} qui lui-même hérite du fichier maître MF. Le fichier élémentaire EF_{VGCS} contient la liste des identifiants GID1,...,GIDN d'appels de groupe VGCS correspondants aux N appels de groupe VGCS auxquels l'usager de la carte SIM a souscrit. Ce fichier est étroitement lié au fichier élémentaire EF_{VGCSS} qui contient les N informations de l'état d'activation des appels de groupe VGCS souscrits par l'usager. L'information d'activation d'un appel de groupe VGCS prend la valeur 1 lorsque l'appel est activé pour l'usager et la valeur 0 dans le cas contraire. Selon cet exemple, l'appel de groupe VGCS pour une zone géographique 1 est activé et l'appel de groupe VGCS pour une zone géographique N n'est pas activé pour cet usager. Le fichier **EF_{VBS}** contient la liste des identifiants GID1,...,GIDM d'appels de groupe VBS correspondant aux M appels de groupe VBS auxquels l'usager de la carte SIM a souscrit. Ce fichier est étroitement lié au fichier élémentaire EF_{VBSS} qui contient les M informations de l'état d'activation des appels de groupe VBS souscrits par cet usager utilisant la carte SIM. L'information d'activation d'un appel VBS prend la valeur 1 lorsque l'appel est activé pour l'usager et la valeur 0 dans le cas contraire. Selon cet exemple, les appels de groupe VBS sur la zone géographique 1 et sur une autre zone géographique M sont tous les deux activés.

Le fichier élémentaire eMLPP contient les niveaux de priorité d'appel autorisés pour l'usager, dans le cas où l'usager a souscrit un service eMLPP.

Comme on l'a introduit précédemment, dans le cas où un nombre important d'usagers demanderait simultanément l'établissement d'appels de groupe d'une catégorie donnée avec un niveau de priorité élevé, des congestions du réseau de téléphonie se produisent.

De plus, l'association d'un niveau de priorité avec un appel de groupe, lorsqu'elle est réalisée par l'usager lors de l'initiation de cet appel de groupe, n'est pas conviviale du fait qu'elle demande à cet usager de mémoriser des séquences de digits.

La demande de brevet américain US 2004/005904 décrit un procédé de détermination d'associations entre des informations de priorité et des catégories d'appel de groupe d'un service d'appel de groupe déployé sur un réseau de téléphonie mobile. Ce procédé permet d'associer une information de priorité uniquement par catégorie d'appel de groupe. Ainsi, lorsqu'une station mobile émet un appel de groupe d'une catégorie, cet appel est diffusé systématiquement sur toutes les zones géographiques via les BSS et un usager reçoit donc cet appel de groupe quelle que soit la zone géographique dans laquelle il se trouve.

Le problème résolu par la présente invention est donc de prévoir un procédé de détermination d'association entre des informations de priorité et des catégories d'appel de groupe d'un service d'appel de groupe déployé qui soit personnalisable (plus souple) pour l'usager.

A cet effet, la présente invention concerne un procédé de détermination d'associations entre des informations de priorité et des catégories d'appel de groupe d'un service d'appel de groupe déployé sur un réseau de téléphonie mobile. Ce procédé est caractérisé en ce que des informations de priorité sont associées par un usager à chaque catégorie d'appel de groupe distribuée et pour chaque zone géographique dudit réseau de téléphonie par souscription par ledit usager auprès d'un fournisseur dudit service, les informations de priorité associées à une même catégorie d'appel de groupe et pour plusieurs zones géographiques sur lesquelles cette catégorie d'appel de groupe est diffusée sont toutes identiques.

Un fournisseur de services peut ainsi contrôler le risque de congestions du réseau de téléphonie sur une zone géographique donnée en ne délivrant qu'un nombre restreint de niveau priorité élevé pour chaque catégorie d'appel de groupe distribuée sur cette zone géographique.

Par ailleurs, en associant des informations de priorité à chaque catégorie d'appel de groupe et pour chaque zone géographique sur laquelle cette catégorie d'appel de groupe est diffusée, l'usager peut choisir dans quelles zones géographiques il souhaite recevoir cette catégorie d'appel de groupe parmi celles sur lesquelles cette catégorie d'appel de groupe est diffusée.

De plus, le procédé assure que les informations de priorité, définies par l'usager par catégorie d'appel de groupe, sont identiques pour les zones géographiques également choisies par cet usager, facilitant ainsi l'utilisation de ce service d'appel de groupe.

Comme on l'a vu précédemment, au cours d'un appel de groupe, un locuteur peut parler à un instant donné. Les autres usagers, à l'écoute de cet appel de groupe ne peuvent lui couper la parole (afin de parler à leur tour) tant que ce locuteur n'a pas terminé de parler, et éventuellement tant que ce locuteur n'a pas fermé son appel (appel de groupe VBS).

Selon un autre aspect de l'invention, un niveau de priorité et/ou de parole est associé à chacune desdites catégories d'appel de groupe souscrites par ledit usager.

Ainsi, le droit à la parole est hiérarchisé au sein d'un groupe d'usagers participant à un même appel de groupe.

Les informations relatives aux abonnements d'un usager sont mémorisées, le plus souvent, sur un même support amovible qui est associé au terminal de téléphonie mobile utilisé par un usager pour accéder aux services de téléphonie mobile.

Selon une autre caractéristique de la présente invention, le procédé est caractérisé en ce qu'il comporte, en outre, une étape de mémorisation sur ledit support mémoire amovible d'au moins une association entre un niveau de priorité d'appel et/ou de parole et une catégorie d'appel de groupe distribuée sur au moins une zone géographique dudit réseau de téléphonie et souscrite par ledit usager.

La présente invention concerne également un support mémoire amovible destiné à équiper un terminal de communication mobile utilisé par un usager pour accéder à un service d'appel de groupe déployé sur un réseau de téléphonie, ledit service permettant la création d'associations entre des informations de priorité et les catégories desdits appels de groupe, caractérisé en ce que des informations de priorité sont associées par un usager à chaque catégorie d'appel de groupe distribuée et pour chaque zone géographique dudit réseau de téléphonie par souscription par ledit usager auprès d'un fournisseur dudit service, et ledit support mémoire est une carte SIM qui mémorise des informations de priorité qui sont identiques lorsque ces informations sont associées à une même catégorie d'appel de groupe et pour plusieurs zones géographiques sur laquelle cette catégorie d'appel de groupe est diffusée.

Cette caractéristique est avantageuse car elle permet que les informations de priorité relatives à un usager soient regroupées sur un même support propre à l'usager qui peut ainsi changer de terminal de téléphonie mobile de manière transparente pour le réseau de téléphonie mobile en insérant ce support mémoire amovible dans un nouveau terminal de téléphonie.

Ainsi, lors de l'initiation de l'établissement d'un appel de groupe par le terminal de téléphonie mobile utilisé par un usager se trouvant dans une zone géographique couverte par le réseau de téléphonie, ce terminal détermine si cet appel de groupe a été souscrit et activé pour cet usager, et associe alors de manière automatique le niveau de priorité correspondant lors de la demande d'établissement de cet appel au réseau de téléphonie mobile. L'usager n'a alors plus besoin de se préoccuper des priorités à associer à ses demandes d'appels de groupe, rendant l'utilisation de priorité d'appel et/ou de parole plus conviviale.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un exemple d'architecture d'un support mémoire destiné à équiper un terminal de téléphonie mobile,
la Fig. 2 représente un schéma des étapes du procédé de détermination d'association entre des informations de priorité et des catégories d'appels de groupe selon la présente invention,
la Fig. 3 représente un exemple d'architecture d'un support mémoire destiné à équiper un terminal de téléphonie mobile selon la présente invention, et
la Fig. 4 représente un terminal de téléphonie équipé d'un support mémoire amovible selon la présente invention.

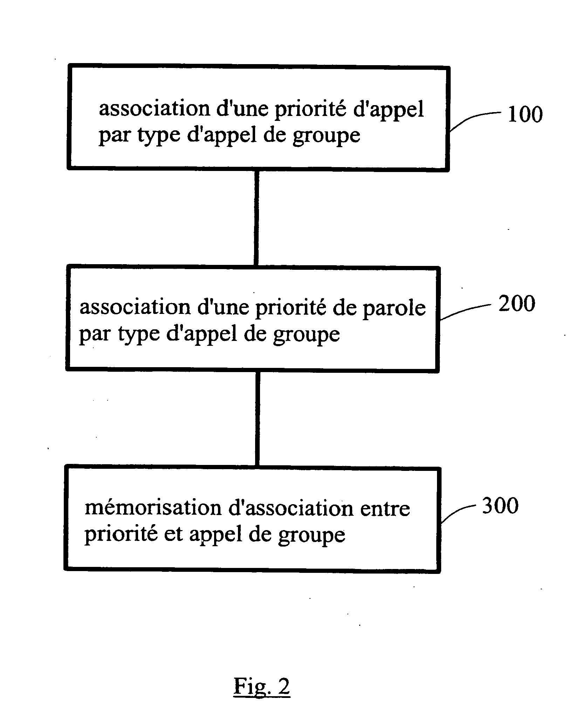

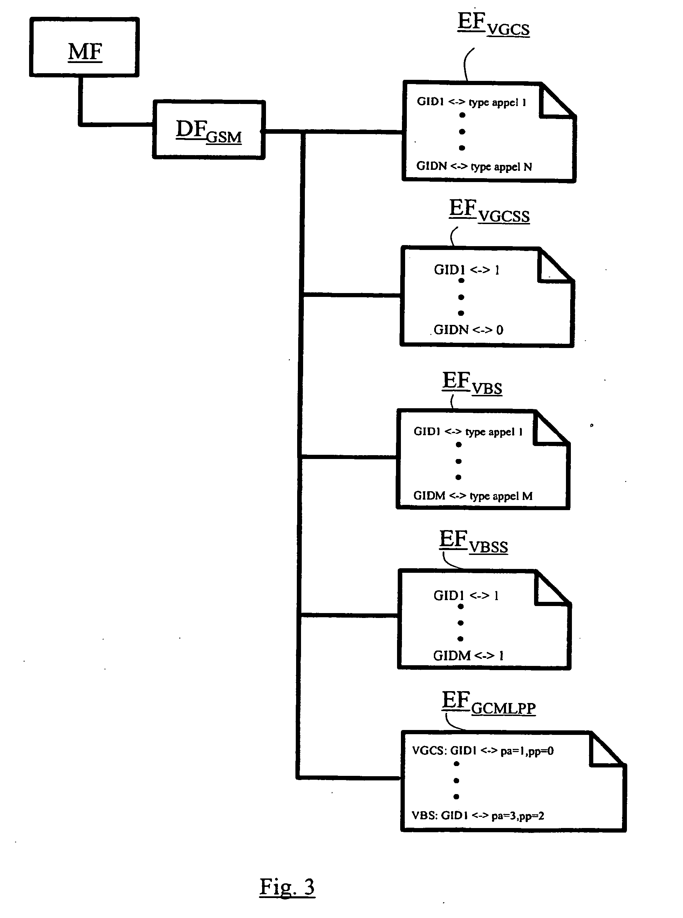

Il est maintenant décrit en relation avec les Fig. 2 et 3 un mode de réalisation de la présente invention dans le cas d'un réseau de type GSM et plus particulièrement dans le cas d'un réseau GSM-R. Un service d'appels de groupe, défini comme indiqué dans la partie introductive, est déployé sur ce réseau de téléphonie par un fournisseur de services de téléphonie mobile. Ce service permet d'associer un identifiant d'appel de groupe unique GID à chaque catégorie d'appel de groupe souscrit tel qu'expliqué précédemment. N identifiants d'appels de groupe VGCS et M identifiants d'appels de groupe VBS sont considérés par la suite comme ayant été souscrits par un usager tel qu'illustré à la Fig. 1.

La Fig. 2 représente un schéma des étapes du procédé de détermination d'association entre des informations de priorité et des catégories d'appels de groupe selon la présente invention. Ce procédé comporte une étape 100 de création d'association entre information de priorité et catégorie d'appel de groupe. Au cours de l'étape 100, un niveau de priorité d'appel pa (pa=0,...4) est associé à chaque catégorie d'appel de groupe distribuée sur une zone géographique dudit réseau de téléphonie et souscrite par un usager auprès d'un fournisseur dudit service pour ladite zone géographique.

Selon une autre caractéristique de la présente invention, au cours de ladite étape 100 un niveau de priorité de parole pp (p=0,...4) est également associé à chacune desdites catégories d'appel de groupe souscrites par ledit usager.

Dans le cas où ledit usager a souscrit une même catégorie d'appel de groupe, par exemple VGCS, distribuée sur G zones géographiques Z1,...,ZG dudit réseau de téléphonie, au cours de ladite étape 100, les G niveaux de priorité d'appel pa, respectivement les G niveaux de priorité de parole pp, associés à ladite catégorie d'appel de groupe souscrite (VGCS) sont tous identiques à un même niveau de priorité d'appel, respectivement à un même niveau de priorité de parole selon une variante de la présente invention.

Il est courant que les informations relatives aux abonnements d'un usager sont mémorisées sur un même support amovible SMA qui est associé au terminal de téléphonie mobile T utilisé par un usager pour accéder aux services de téléphonie.

Selon une autre caractéristique de la présente invention, le procédé comporte une étape de mémorisation 200 sur ledit support mémoire amovible SMA d'au moins une association entre un niveau de priorité d'appel pa et/ou de parole pp et une catégorie d'appel de groupe (VGCS ou VBS) distribuée sur au moins une zone géographique Zi (i=1,...,G) dudit réseau de téléphonie et souscrite par ledit usager.

La Fig. 3 représente un exemple d'architecture du support mémoire amovible SMA selon la présente invention. Les éléments de cette figure qui portent les mêmes références que celles de la Fig. 1 désignent les mêmes éléments.

Selon cet exemple d'architecture, chaque association mémorisée sur le support mémoire amovible SMA est inclue dans un même fichier EF_{GCMLPP}. On peut, bien évidemment mémoriser ces associations dans plusieurs fichiers qui regroupent chacun, par exemple, les associations relatives à une même catégorie d'appel de groupe.

Selon la Fig. 3, l'identifiant GID1 d'appel de groupe VGCS distribué sur une zone géographique Z1 est associé à un niveau de priorité d'appel pa=1 et à un niveau de priorité de parole pp=0 et l'identifiant GID1 d'appel de groupe VBS distribué sur la zone géographique Z1 est associé à un niveau de priorité d'appel pa=3 et à un niveau de priorité de parole pp=2. Bien entendu, cet exemple n'est pas limitatif et on comprend que toutes les associations entre catégorie d'appel de groupe souscrit par un usager pour une zone géographique et niveau de priorité d'appel et/ou de parole peuvent ainsi être mémorisées sur le support mémoire amovible SMA.

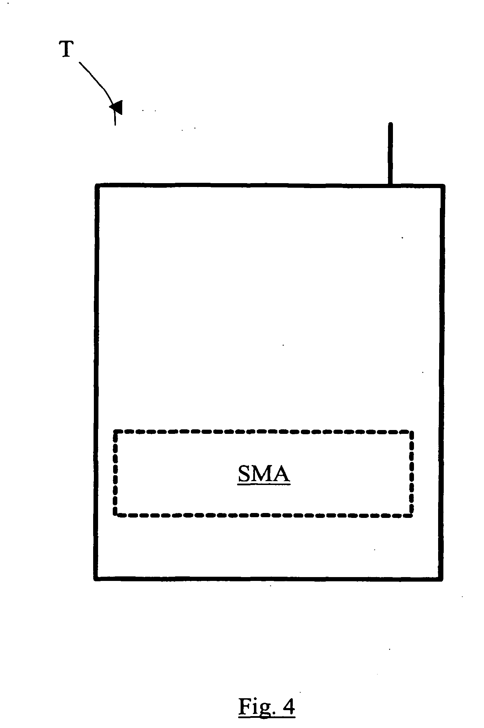

La Fig. 4 représente le terminal de téléphonie mobile T selon la présente invention. Le terminal T est équipé du support mémoire amovible SMA qui est caractérisé selon la présente invention. Ce support mémoire amovible est par exemple une carte SIM. Le terminal, qui peut de manière non limitative être un téléphone mobile, est également équipé de moyens classiques (non représentés) qui permettent à un usager de pouvoir communiquer avec un réseau de téléphonie mobile tel que le réseau GSM-R.

## Revendications

1. Procédé de détermination d'associations entre des informations de priorité et des catégories d'appel de groupe d'un service d'appel de groupe déployé sur un réseau de téléphonie mobile, **caractérisé en ce que** des informations de priorité sont associées par un usager à chaque catégorie d'appel de groupe distribuée et pour chaque zone géographique dudit réseau de téléphonie par souscription par ledit usager auprès d'un fournisseur dudit service, les informations de priorité associées à une même catégorie d'appel de groupe et pour plusieurs zones géographiques sur lesquelles cette catégorie d'appel de groupe est diffusée sont toutes identiques.

2. Procédé de détermination d'associations selon la revendication 1, **caractérisé en ce qu'**une desdites informations de priorité est un niveau de priorité.

3. Procédé de détermination d'associations selon la revendication 1 ou 2, **caractérisé en ce qu'**une desdites informations de priorité est un niveau de priorité de parole.

4. Procédé de détermination d'associations selon l'une des revendications 1 à 3, ledit usager utilisant un terminal de communication mobile équipé d'un support mémoire amovible, **caractérisé en ce qu'**il comporte en outre une étape de mémorisation sur ledit support mémoire amovible d'au moins une association entre un niveau de priorité d'appel et/ou de parole et une catégorie d'appel de groupe distribuée sur au moins une zone géographique dudit réseau de téléphonie et souscrite par ledit usager.

5. Procédé de détermination d'associations selon l'une des revendications précédentes, **caractérisé en ce que** ledit support mémoire amovible est une carte SIM.

6. Support mémoire amovible destiné à équiper un terminal de communication mobile utilisé par un usager pour accéder à un service d'appel de groupe déployé sur un réseau de téléphonie, ledit service permettant la création d'associations entre des informations de priorité et les catégories desdits appels de groupe, **caractérisé en ce que** des informations de priorité sont associées par un usager à chaque catégorie d'appel de groupe distribuée et pour chaque zone géographique dudit réseau de téléphonie par souscription par ledit usager auprès d'un fournisseur dudit service, et ledit support mémoire est une carte SIM qui mémorise des informations de priorité qui sont identiques lorsque ces informations sont associées à une même catégorie d'appel de groupe et pour plusieurs zones géographiques sur laquelle cette catégorie d'appel de groupe est diffusée.

7. Terminal de communication mobile équipé d'un support mémoire amovible, **caractérisé en ce que** ledit support mémoire amovible est conforme à la revendication 6.

## Claims

1. Method of determining associations between priority information and group call categories of a group call service deployed on a mobile telephone network, **characterised in that** priority information is associated by a user with each distributed group call category and for each geographical zone of said telephone network by subscription by said user to a provider of said service, the priority information associated with the same group call category and for a plurality of geographical zones over which that group call category is broadcast is identical.

2. Method of determining associations according to claim 1, **characterised in that** one of said items of priority information is a priority level.

3. Method of determining associations according to claim 1 or 2, **characterised in that** one of said items of priority information is a speech priority level.

4. Method of determining associations according to any one of claims 1 to 3, said user using a mobile communications terminal equipped with a removable memory device, **characterised in that** it further comprises a step of storing on said removable memory device at least one association between a call and/or speech priority level and a group call category distributed over at least one geographical zone of said telephone network and subscribed to by said user.

5. Method of determining associations according to any one of the preceding claims, **characterised in that** said removable memory device is a SIM card.

6. Removable memory device with which a mobile communications terminal used by a user to access a group call service deployed on a telephone network is to be equipped, said service permitting the creation of associations between priority information and the categories of said group calls, **characterised in that** priority information is associated by a user with each distributed group call category and for each geographical zone of said telephone network by subscription by said user to a provider of said service, and said memory device is a SIM card which stores priority information which is identical when the information is associated with the same group call category and for a plurality of geographical zones over which that group call category is broadcast.

7. Mobile communications terminal equipped with a removable memory device, **characterised in that** said removable memory device is in accordance with claim 6.

## Patentansprüche

1. Verfahren zur Bestimmung von Zuordnungen zwischen Prioritätsinformationen und Gruppenrufkategorien eines in einem Mobiltelefonnetz bereitgestellten Gruppenrufdiensts, **dadurch gekennzeichnet, dass** Prioritätsinformationen von einem Benutzer jeder ausgegebenen Gruppenrufkategorie und für jede geographische Zone des Telefonnetzes durch Abonnement des Benutzers bei einem Anbieter des Diensts zugeordnet werden, wobei die der gleichen Gruppenrufkategorie und für mehrere geographische Zonen, in denen diese Gruppenrufkategorie verbreitet wird, zugeordneten Prioritätsinformationen alle gleich sind.

2. Verfahren zur Bestimmung von Zuordnungen nach Anspruch 1, **dadurch gekennzeichnet, dass** eine der Prioritätsinformationen eine Prioritätsebene ist.

3. Verfahren zur Bestimmung von Zuordnungen nach Anspruch 1 oder 2, **dadurch gekennzeichnet, dass** eine der Prioritätsinformationen eine Sprachprioritätsebene ist.

4. Verfahren zur Bestimmung von Zuordnungen nach einem der Ansprüche 1 bis 3, wobei der Benutzer ein mobiles Kommunikationsendgerät verwendet, das mit einem entfernbaren Speicherträger ausgestattet ist, **dadurch gekennzeichnet, dass** es außerdem einen Schritt der Speicherung auf dem entfernbaren Speicherträger mindestens einer Zuordnung zwischen einer Ruf- und/oder Sprachprioritätsebene und einer Gruppenrufkategorie aufweist, die in mindestens einer geographischen Zone des Telefonnetzes ausgegeben wird und auf die der Benutzer abonniert ist.

5. Verfahren zur Bestimmung von Zuordnungen nach einem der vorhergehenden Ansprüche, **dadurch gekennzeichnet, dass** der entfernbare Speicherträger eine SIM-Karte ist.

6. Entfernbarer Speicherträger, der zur Ausstattung eines mobilen Kommunikationsendgeräts bestimmt ist, das von einem Benutzer verwendet wird, um auf einen Gruppenrufdienst zuzugreifen, der in einem Telefonnetz bereitgestellt wird, wobei der Dienst die Erzeugung von Zuordnungen zwischen Prioritätsinformationen und den Kategorien der Gruppenrufe erlaubt, **dadurch gekennzeichnet, dass** Prioritätsinformationen von einem Benutzer jeder ausgegebenen Gruppenrufkategorie und für jede geographische Zone des Telefonnetzes durch Abonnement des Benutzers bei einem Anbieter des Diensts zugeordnet werden, und der Speicherträger eine SIM-Karte ist, die Prioritätsinformationen speichert, welche gleich sind, wenn diese Informationen der gleichen Gruppenrufkategorie und für mehrere geographische Zonen zugeordnet sind, in denen diese Gruppenrufkategorie verbreitet wird.

7. Mobiles Kommunikationsendgerät, das mit einem entfernbaren Speicherträger ausgestattet ist, **dadurch gekennzeichnet, dass** der entfernbare Speicherträger gemäß Anspruch 6 ist.
